# EUROPÄISCHE PATENTSCHRIFT

(11) **EP 1 512 562 B1**
(45) Veröffentlichungstag und Bekanntmachung des Hinweises auf die Patenterteilung: **13.09.2006**
(21) Anmeldenummer: 03292199.1
(22) Anmeldetag: 05.09.2003
(51) Int. Cl.: B60H 1/00

(54) **Klimaanlage für ein Kraftfahrzeug**
Vehicle air conditioning system
Dispositif de climatisation pour véhicule

(43) Veröffentlichungstag der Anmeldung: 09.03.2005
(73) Patentinhaber: Behr France Rouffach SAS, 68250 Rouffach (FR)
(72) Erfinder: Klein, Henri, 68000 Colmar (FR); Sehmann, Daniel, 67860 Rhinau (FR)
(74) Vertreter: Grauel, Andreas

(56) Entgegenhaltungen:
- DE-A- 10 042 683
- DE-A- 10 158 956
- US-A- 6 019 163
- US-A1- 2002 189 787

## Beschreibung

Die Erfindung betrifft eine Klimaanlage für ein Kraftfahrzeug nach dem Oberbegriff des Patentanspruches 1.

Dies wird z.B. in der US 6019 163 gezeigt

Klimaanlagen für Kraftfahrzeuge in ihrer einfachsten Ausführung - z. B. gemäß DE 100 42 683 - versorgen den gesamten Fahrzeuginnenraum mit klimatisierter Luft gleicher Temperatur. Für höhere Komfortansprüche sind so genannte Rechts/Links-Regelungen bekannt, bei welchen der Bereich um den Fahrer und der Bereich um den Beifahrer, also zwei Zonen, individuell klimatisierbar sind, d. h. mit Luftströmen unterschiedlicher Temperatur. Für größere Fahrzeuge, insbesondere Vans, wurden so genannte Vier-Zonen-Klimatisierungen bekannt, bei welchen der Fahrzeuginnenraum in vier Zonen aufgeteilt ist, welche mit Luft unterschiedlicher Temperatur versorgt werden können. Das Problem besteht meistens darin, einen hinreichenden Klimatisierungskomfort mit geringem Bau- und Kostenaufwand für die Klimaanlage zu erreichen.

Durch die DE 197 31 908 A1 wurde eine Vier-Zonen-Klimatisierungsanlage bekannt, bei welcher der Luftaustrittsquerschnitt hinter dem Heizkörper durch zwei senkrecht zueinander verlaufende Trennwände in vier quadrantenähnliche Mischräume aufgeteilt ist, von welchen Luftauslasskanäle für unterschiedlich temperierte Luftströme ausgehen. Die Temperaturregelung erfolgt dabei durch Mischung von Kaltluft über Bypass-Kaltluftkanäle und Warmluft mittels Kaltluft- und Warmluftmischklappen. Eine solche Klimaanlage ist relativ aufwendig.

Durch die DE 197 39 578 A1 wurde eine weitere Vier-Zonen-Klimatisierungsanlage bekannt, bei welcher ein Kaltluftkanal in vier Teilkanäle unterteilt ist, welche durch vier separate Mischklappen kontrolliert werden. Die Mischklappen sind nebeneinander angeordnet und weisen eine gemeinsame Schwenkachse auf, die sich in Längsrichtung des Heizkörpers erstreckt. Durch diese Schwenkklappenanordnung werden in vier separaten Luftmischräumen unterschiedliche temperierte Luftströme erzeugt, die über Luftauslasskanäle den vier Zonen des Fahrzeuginnenraums zuleitbar sind. Auch diese Anlage, von der die Erfindung ausgeht, ist, u. a. wegen der zahlreichen Trennwände und Klappen, ebenfalls sehr aufwendig.

Es ist Aufgabe der vorliegenden Erfindung, eine Klimaanlage der eingangs genannten Art zu vereinfachen, insbesondere kompakt zu gestalten und dennoch einen hinreichenden Klimatisierungskomfort zu bieten.

Diese Aufgabe wird durch die Merkmale des Patentanspruches 1 gelöst. Durch die Anordnung des Heizkörpers oberhalb des Verdampfers wird eine kompakte Bauweise, insbesondere eine in Fahrtrichtung des Kraftfahrzeuges (x-Richtung) verkürzte Klimaanlage bereitgestellt. Dies bringt u. a. ein höheres Raumangebot im Frontbereich des Fahrzeuginnenraums. Darüber hinaus ist die Klimaanlage als Drei-Zonen-Anlage konzipiert und weist somit nur drei nebeneinander angeordnete Mischklappen auf, wodurch drei unterschiedlich temperierte Luftströme erzeugt werden können. Diese gelangen in mehrere, vorzugsweise drei Luftauslasskanäle, über welche sie drei Zonen des Fahrzeuginnenraumes, nämlich vorne links, vorne rechts und dem Fond zuführbar sind. Somit ergibt sich als Vorteil eine kompakte Klimaanlage mit überdurchschnittlichem Komfortangebot.

Nach einer vorteilhaften Ausgestaltung der Erfindung sind die Luftauslasskanäle in Fahrtrichtung vorn liegend am Gehäuse angeordnet, d. h. auf der dem Kaltluftkanal gegenüber liegenden Seite. Dabei ist der mittlere Luftauslasskanal der mittleren Mischklappe zugeordnet und klimatisiert die dritte Zone, d. h. den Fond. Vorzugsweise führt der mittlere Luftauslasskanal von oben nach unten, während die Kaltluft von unten nach oben strömt. Es ergeben sich somit kurze Luftwege mit geringen Umlenkungen und damit geringe luftseitige Druckabfälle. Im Gegensatz zum Stand der Technik benötigt die erfindungsgemäße Klimaanlage keine Trennwände, weder im Kaltluftkanal noch im Luftmischraum. Vielmehr werden die unterschiedlich temperierten Teilluftströme durch Temperaturschichtung eines Hauptluftstromes erzeugt. Dafür ist allerdings eine hinreichende Höhe von Verdampfer und Heizkörper erforderlich, um die drei Mischklappen nebeneinander anzuordnen. Nach einer bevorzugten Ausführungsform ist daher das Verhältnis von Höhe zu Breite sowohl beim Verdampfer als auch beim Heizkörper größer als zwei, vorzugsweise größer als drei.

Ein Ausführungsbeispiel der Erfindung ist in der Zeichnung dargestellt und wird im Folgenden näher beschrieben. Es zeigen
- Fig. 1: einen Schnitt durch das Gehäuse einer Klimaanlage,
- Fig. 2: eine perspektivische Darstellung der Klimaanlage und
- Fig. 3: eine perspektivische Darstellung einer Anordnung von Verdampfer und Heizkörper mit Mischklappen.

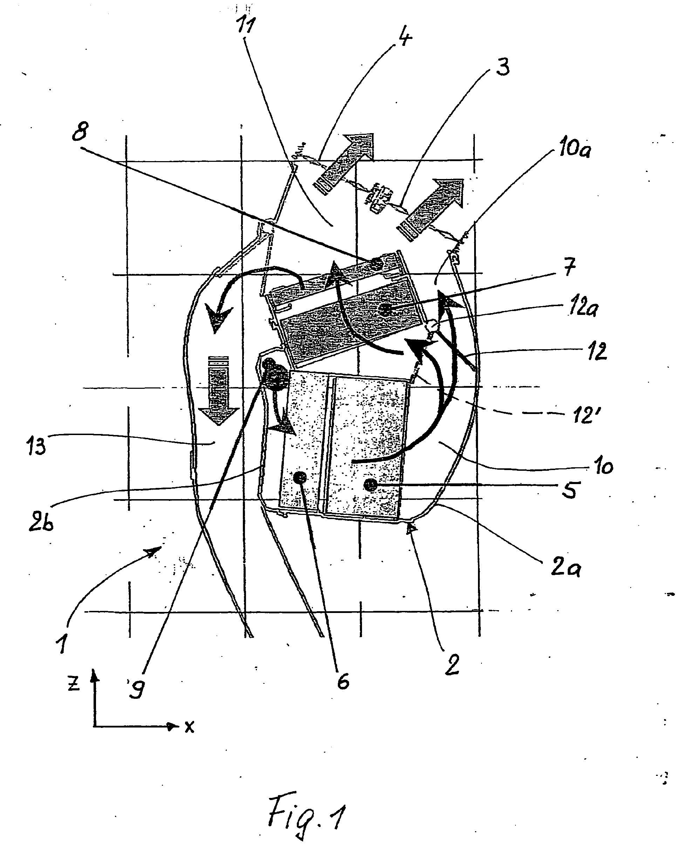

**Fig. 1** zeigt eine Klimaanlage 1, dargestellt als Schnitt in der x-z-Ebene eines nicht dargestellten Kraftfahrzeuges, wobei die x-Richtung der Fahrtrichtung entspricht. Die Klimaanlage 1 wird von frontseitig unter der nicht dargestellten Instrumententafel des Fahrzeuges eingebaut und weist ein Gehäuse 2 mit einem Belüftungsauslass 3 und einem Scheibendefrosterauslass 4 auf. Innerhalb des Gehäuses 2 ist im unteren Bereich ein Verdampfer 5 angeordnet, dem optional ein Filter 6 vorgeschaltet sein kann. Oberhalb des Verdampfers 5 ist ein Heizkörper 7 angeordnet, dem optional eine elektrische Zusatzheizung 8 nachgeschaltet sein kann. Das Gehäuse 2 weist eine in x-Richtung hintere Gehäusewand 2a und eine in Fahrtrichtung vorne liegende Gehäusewand 2b auf. Innerhalb der Gehäusewand 2b strömt Luft in das Gehäuse 2, welche von einem hier nicht dargestellten Gebläse gefördert wird und durch einen Punkt mit Pfeil 9 dargestellt ist. Zwischen der hinteren Gehäusewand 2a und dem Verdampfer 5 sowie dem Heizkörper 7 sind ein Kaltluftkanal 10 und ein Kaltluftbypass 10a angeordnet. Im Kaltluftkanal 10 ist eine Mischklappe 12 schwenkbar um eine Achse 12a angeordnet, die sich parallel (senkrecht zur Zeichenebene) zu einer Längskante des Heizkörpers 7 erstreckt. Die Mischklappe 12 ist in Richtung der Schwenkachse 12a dreigeteilt, d. h. sie besteht aus drei nebeneinander angeordneten Klappen, was im Zusammenhang mit Fig. 3 erläutert wird. Die Mischklappe 12 ist zwischen der einen Extremstellung 12 (Kaltluftkanal 10 geschlossen) und der anderen Extremstellung 12' (Kaltluftkanal 10 offen) schwenkbar. Der Kaltluftkanal 10 setzt sich hinter der Mischklappe 12 als Kaltluftbypass 10a fort, der in einen Luftmischraum 11 führt, welcher stromabwärts des Heizkörpers 7 angeordnet ist. Vom Luftmischraum 11 zweigt ein mittlerer Luftauslasskanal 13 ab, der an der Vorderseite 2b des Gehäuses nach unten gerichtet verläuft und den hier nicht dargestellten Fondraum des Kraftfahrzeuges mit klimatisierter Luft versorgt. Zwei weitere, hier nicht sichtbare Luftauslasskanäle sind seitlich des Luftauslasskanales 13 angeordnet - wie aus der nächsten Figur erkennbar.

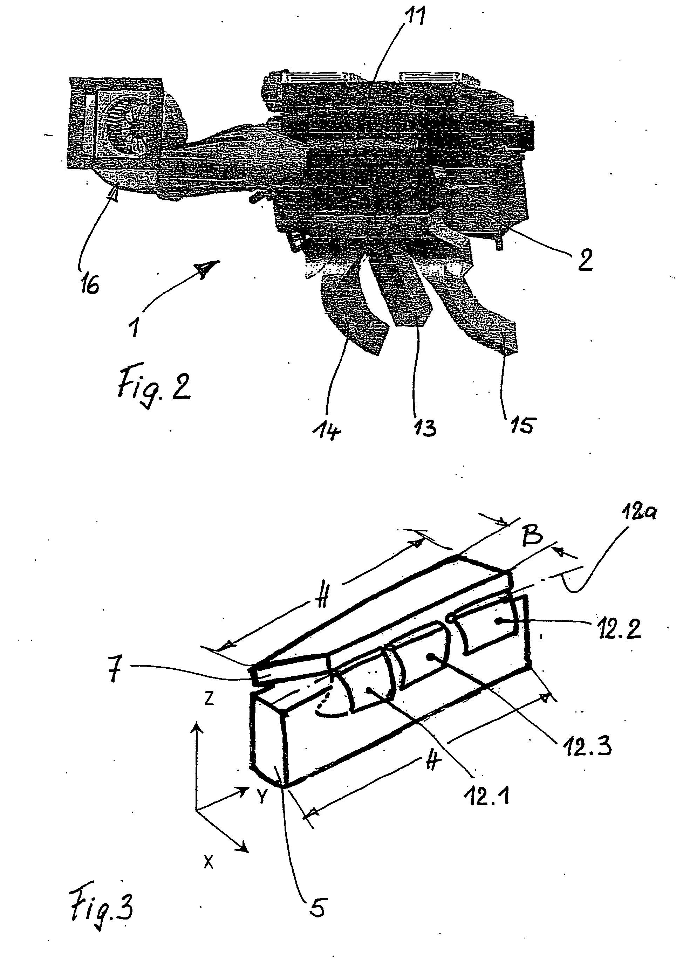

**Fig. 2** zeigt die Klimaanlage 1 gemäß Fig. 1 einer perspektivischen Darstellung von vorn, d. h. entgegen der Fahrtrichtung des nicht dargestellten Fahrzeuges gesehen. Es werden gleiche Bezugszeichen wie in Fig. 1 verwendet. Seitlich des mittleren Luftkanals 13 sind zwei weitere Luftauslasskanäle 14, 15 angeordnet, die ebenfalls vom Luftmischraum 11 ausgehen und für die Klimatisierung des rechten und linken Frontbereiches des Fahrzeuginnenraumes, also für die Fahrer- und für die Beifahrerseite vorgesehen sind. Seitlich des Gehäuses 2 ist ein Gebläse 16 angeordnet, welches zu klimatisierende Luft in das Gehäuse fördert (vgl. Lufteintritt 9 in Fig. 1).

**Fig. 3** zeigt einen Ausschnitt der Klimaanlage 1 im Bereich der Mischklappen 12, die aus drei Mischklappen 12.1, 12..2, 12.3 besteht. Der Ausschnitt zeigt ferner den Verdampfer 5 und darüber, leicht geneigt, den Heizkörper 7, d. h. in einer Anordnung, wie sie in Fig. 1 dargestellt ist. Zur Orientierung ist das Achsenkreuz mit den Achsen x, y, z daneben angeordnet. Am Heizkörper 7 sind, um eine gemeinsame Achse 12a schwenkbar, die drei Mischklappen angeordnet, nämlich zwei äußere Mischklappen 12.1 und 12.2 und eine mittlere Mischklappe 12.3, welche dem mittleren Luftauslasskanal 13 (vgl.

Fig. 1 und 2) zugeordnet ist. Die beiden äußeren Mischklappen 12.1. und 12.2. sind den beiden äußeren Luftauslasskanälen 15, 14 bzw. den Luftauslasskanälen für Scheibendefrost 4 und Belüftung 3 zugeordnet. Mischklappen und Luftaustrittskanäle sind somit in gleichen parallelen Ebenen angeordnet, sodass sich eine zweidimensionale Luftströmung - abgesehen von Verwirbelungseffekten - ergibt.

Die Funktion der Mischklappen 12.1, 12.2., 12.3 ist eine luftseitige Temperaturregelung, d. h. der vom Verdampfer 5 abgekühlte, durch den Kaltluftkanal 10 strömende Kaltluftstrom wird entweder durch den Heizkörper 7 geführt oder an dem Heizkörper 7 durch den Bypasskanal 10a vorbeileitet (vgl. Fig. 1) oder sowohl durch den Heizkörper 7 als auch durch den Bypasskanal 10a geleitet, wobei diverse Zwischenstellungen möglich sind. Die Mischklappen 12.1., 12.2., 12.3 können unabhängig voneinander verschwenkt werden, je nach Wunsch des Fahrers oder Beifahrers oder der Fondpassagiere, d. h. entsprechend der gewünschten Temperatur für eine Zone 1, eine Zone 2 und eine Zone 3 im Fahrzeuginnenraum. Bei unterschiedlicher Stellung der Mischklappen 12.1., 12.2., 12.3 entstehen im Mischraum 11 unterschiedlich temperierte Luftteilströme, d. h. ein Luftstrom mit einer Temperaturschichtung in y-Richtung. Ist beispielsweise die Mischklappe 12.3 geschlossen (Stellung 12' in Fig. 1), während die äußeren Mischklappen 12.1., 12.2 offen sind (Stellung 12 in Fig. 1), dann wird die Zone 3, also der Fondraum mit Kaltluft versorgt, während in den Frontbereich rechts und links Warmluft einströmt. Damit keine Durchmischung der Teilluftströme in y-Richtung und damit eine Temperaturangleichung erfolgt, müssen Verdampfer 5 und Heizkörper 7 eine relativ große Höhe H aufweisen, d. h. eine Erstreckung in y-Richtung. Das Verhältnis von Höhe H zu Breite B soll dabei über dem Wert 2, vorzugsweise 3 liegen, sodass der Heizkörper 7 mindestens doppelt bzw. dreimal so hoch wie breit ist.

Die Luftströmung innerhalb der Klimaanlage (dargestellt durch Pfeile in Fig. 1) erfolgt ohne starke Umlenkungen und folgt etwa, ausgehend vom Lufteintritt 9 in Fig. 1, dem Verlauf einer Spirale: Vom Verdampfer 5 über den Kaltluftkanal 10 durch den Heizkörper 7 und/oder durch den Bypass 10a, durch den Mischraum 11 bis in die Luftauslasskanäle 13, 14, 15. Dies bedeutet neben einer kompakten Bauweise einen relativ geringen luftseitigen Druckverlust.

## Patentansprüche

1. Klimaanlage für ein Kraftfahrzeug mit einem Gehäuse (2), welches einen Verdampfer (5), einen Heizkörper (7), einen Kaltluftkanal (10) mit Bypass (10a) und mit Mischklappen (12) sowie Luftauslasskanäle aufweist, wobei die Mischklappen (12) um eine Achse (12a) schwenkbar und nebeneinander im Kaltluftkanal (10) angeordnet sind und unterschiedlich temperierte Luftströme erzeugen, die über die Luftauslasskanäle unterschiedlichen Zonen des Kraftfahrzeuges zuführbar sind, wobei der Heizkörper (7) bei im Kraftfahrzeug eingebauter Klimaanlage (1) oberhalb des Verdampfers (5) angeordnet ist **dadurch gekennzeichnet, dass** drei Mischklappen (12.1., 12.2., 12.3) vorgesehen sind, denen mehrere Luftauslasskanäle (3, 4, 13, 14, 15) zugeordnet sind.

2. Klimaanlage nach Anspruch 1, **dadurch gekennzeichnet, dass** die Mischklappen (12.1, 12.2, 12.3) um eine gemeinsame Achse (12a) oder um parallel angeordnete Achsen schwenkbar sind.

3. Klimaanlage nach Anspruch 1 oder 2, **dadurch gekennzeichnet, dass** die Luftauslasskanäle (13, 14, 15) auf der dem Kaltluftkanal (10) gegenüberliegenden (in Fahrtrichtung vorn liegenden) Seite des Gehäuses (2) und nebeneinander angeordnet sind und dass der mittlere Luftauslasskanal (13) der mittleren Mischklappe (12.3) zugeordnet ist.

4. Klimaanlage nach Anspruch 3, **dadurch gekennzeichnet, dass** stromabwärts und oberhalb des Heizkörpers (7) und des Kaltluftkanals (10a) ein Luftmischraum (11) angeordnet ist, von welchem die Luftauslasskanäle (13, 14, 15) ausgehen.

5. Klimaanlage nach Anspruch 3 oder 4, **dadurch gekennzeichnet, dass** der mittlere Luftauslasskanal (13) von oben nach unten verlaufend angeordnet ist.

6. Klimaanlage nach einem der Ansprüche 1 bis 5, **dadurch gekennzeichnet, dass** der Verdampfer (5) und der Heizkörper (7) eine in Richtung der Schwenkachse (12a) der Mischklappen (12.1., 12.2., 12.3) verlaufende Höhe H und eine Breite B aufweisen, wobei H > 2 B, vorzugsweise H > 3 B ist.

## Claims

1. An air conditioning system for a motor vehicle having a housing (2) which has an evaporator (5), a heating element (7), a cold air duct (10) with bypass (10a), mixer flaps (12) and air outlet ducts, the mixer flaps (12) being positioned adjacent to one another in the cold air duct (10) such that they are able to pivot about an axis (12a) and generating air flows of different temperatures which can be supplied to different zones of the motor vehicle by the air outlet ducts, the heating element (7) being positioned above the evaporator (5) when the air conditioning system (1) is fitted in the motor vehicle,
**characterised in that**
three mixer flaps (12.1, 12.2, 12.3) which are assigned to various air outlet ducts (3, 4, 13, 14, 15) are provided.

2. An air conditioning system in accordance with claim 1,
**characterised in that**
the mixer flaps (12.1, 12.2, 12.3) can be pivoted about a common axis (12a) or about axes which are positioned parallel to one another.

3. An air conditioning system in accordance with claim 1 or 2,
**characterised in that**
the air outlet ducts (13, 14, 15) are positioned adjacent to one another and on the side of the housing (2) opposite the cold air duct (10) (at the front in the direction of movement), and the central air outlet duct (13) is assigned to the central mixer flap (12.3).

4. An air conditioning system in accordance with claim 3,
**characterised in that**
positioned downstream of and above the heating element (7) and the cold air duct (10a) is an air mixing chamber (11) from which lead the air outlet ducts (13, 14, 15).

5. An air conditioning system in accordance with claim 3 or 4,
**characterised in that**
the central air outlet duct (13) and is positioned running from top to bottom.

6. An air conditioning system in accordance with one of the claims 1 to 5,
**characterised in that**
the evaporator (5) and the heating element (7) are of height (H) running in the direction of the axis of pivoting (12a) of the mixer flaps (12.1, 12.2, 12.3) and of width (B), H > 2 B, preferably H > 3 B.

## Revendications

1. Dispositif de climatisation pour un véhicule automobile comprenant un boîtier (2), lequel présente un évaporateur (5), un corps de chauffe (7), un canal d'air froid (10) avec dérivation (10a), et des clapets de mélange (12) ainsi que des canaux de sortie d'air, les clapets de mélange (12) pouvant basculer autour d'un axe (12a) et étant disposés les uns à côté des autres dans le canal d'air froid (10) et générant des flux d'air mis en température de façon différente, qui peuvent être amenés au moyen des canaux de sortie d'air à différentes zones du véhicule, le corps de chauffe (7) étant disposé sur le dispositif de climatisation (1) monté dans le véhicule au-dessus de l'évaporateur (5), **caractérisé en ce que** trois clapets de mélange (12.1, 12.2, 12.3) sont prévus, auxquels sont attribués plusieurs canaux de sortie d'air (3, 4, 13, 14, 15).

2. Dispositif de climatisation selon la revendication 1, **caractérisé en ce que** les clapets de mélange (12.1, 12.2, 12.3) peuvent basculer autour d'un axe (12a) commun ou autour d'axes disposés en parallèle.

3. Dispositif de climatisation selon la revendication 1 ou 2, **caractérisé en ce que** les canaux de sortie d'air (13, 14, 15) sont disposés sur le côté, faisant face au canal d'air froid (10) (disposé à l'avant dans le sens de marche), du boîtier (2) et les uns à côté des autres et **en ce que** le canal de sortie d'air (13) central est attribué au clapet de mélange (12.3) central.

4. Dispositif de climatisation selon la revendication 3, **caractérisé en ce qu'**en aval et en amont du corps de chauffe (7) et du canal d'air froid (10a) est disposé un espace de mélange d'air (11), duquel partent les canaux de sortie d'air (13, 14, 15).

5. Dispositif de climatisation selon la revendication 3 ou 4, **caractérisé en ce que** le canal de sortie d'air (13) central est disposé en s'étendant du haut vers le bas.

6. Dispositif de climatisation selon l'une quelconque des revendications 1 à 5, **caractérisé en ce que** l'évaporateur (5) et le corps de chauffe (7) présentent une hauteur H agencée dans le sens de l'axe de basculement (12a) des clapets de mélange (121.1, 12.2, 12.3) et une largeur B, H étant supérieure à 2 B, et de préférence supérieure à 3 B.
